# EUROPÄISCHE PATENTSCHRIFT

(11) **EP 3 314 104 B1**
(45) Veröffentlichungstag und Bekanntmachung des Hinweises auf die Patenterteilung: **24.04.2019**
(21) Anmeldenummer: 16724012.6
(22) Anmeldetag: 13.05.2016
(51) Int. Cl.: F02B 37/10, F01L 1/34, F02B 39/10, F01L 1/38, F01L 13/00, F02B 69/06, F02B 75/02

(54) **VERFAHREN UND VORRICHTUNG ZUM BETREIBEN EINER ANTRIEBSVORRICHTUNG, ANTRIEBSVORRICHTUNG, KRAFTFAHRZEUG**
METHOD AND DEVICE FOR OPERATING A DRIVE UNIT, DRIVE UNIT, MOTOR VEHICLE
PROCÉDÉ ET DISPOSITIF DE FONCTIONNEMENT D'UN DISPOSITIF D'ENTRAÎNEMENT, DISPOSITIF D'ENTRAÎNEMENT, VÉHICULE À MOTEUR

(30) Priorität: 29.06.2015 DE 102015212070
(43) Veröffentlichungstag der Anmeldung: 02.05.2018
(73) Patentinhaber: Robert Bosch GmbH, 70442 Stuttgart (DE)
(72) Erfinder: BAEUERLE, Michael, 71735 Eberdingen (DE); NAU, Michael, 72175 Dornhan/Aischfeld (DE)
(86) Internationale Anmeldenummer: PCT/EP2016/060846
(87) Internationale Veröffentlichungsnummer: WO 2017/001107

(56) Entgegenhaltungen:
- EP-A1- 0 433 039
- JP-A- S58 152 139
- US-A1- 2010 300 383
- US-A1- 2011 022 289

## Beschreibung

Die Erfindung betrifft ein Verfahren zum Betreiben einer Antriebsvorrichtung eines Kraftfahrzeugs, die einen Hubkolbenmotor und einen Abgasturbolader aufweist, wobei zumindest in einem Lastbetrieb der Hubkolbenmotor in einem 4-Takt-Betrieb betrieben wird, und wobei der Abgasturbolader eine elektrische Maschine, insbesondere Medienspaltmaschine, aufweist, die in einem Schubbetrieb des Hubkolbenmotors generatorisch betrieben wird.

Ferner betrifft die Erfindung eine Vorrichtung zum Betreiben einer derartigen Antriebsvorrichtung sowie eine entsprechende Antriebsvorrichtung und ein Kraftfahrzeug.

### Stand der Technik

Aus dem Stand der Technik ist es bereits bekannt, Abgasturbolader von Antriebsvorrichtungen von Kraftfahrzeugen elektrisch zu unterstützen, sodass insbesondere ein verzögerter Druckaufbau bei niedrigen Drehzahlen des Hubkolbenmotors überwunden werden kann. Dabei wird der Abgasturbolader zumindest zeitweise durch die elektrische Maschine angetrieben, sodass die Leistung des Abgasturboladers unabhängig von dem zum Antrieb zur Verfügung stehenden Abgas des Hubkolbenmotors ist. Ein entsprechender Hubkolbenmotor ist aus EP 0 433 039 A1 bekannt. Als vorteilhafte Lösung zur Integration einer elektrischen Maschine in den Abgasturbolader hat sich die Verwendung von sogenannten Medienspaltmaschinen herausgestellt. Eine Medienspaltmaschine zeichnet sich durch einen verhältnismäßig großen Luftspalt zwischen Stator und Rotor aus, der bei ordnungsgemäßer Verwendung zur Führung eines Mediums nutzbar ist. Bei der Verwendung in einem Abgasturbolader wird die Medienspaltmaschine derart integriert, dass sie in einem Saugkanal des Abgasturboladers liegt, sodass durch den zuvor genannten Luftspalt die zu fördernde Luft hindurchströmt. Hierdurch wird eine besonders kompakte Integration des Elektromotors in den Turbolader ermöglicht.

Durch die weiter fortschreitende Elektrifizierung von Kraftfahrzeugen kommt außerdem der Rückgewinnung elektrischer Energie eine immer höhere Bedeutung zu. Um Energie zu gewinnen ist es dabei beispielsweise auch bereits bekannt, die Medienspaltmaschine generatorisch zu betreiben, wobei die Antriebskraft im generatorischem Betrieb dann insbesondere durch das Abgas des Hubkolbenmotors zur Verfügung gestellt wird. Diese Verwendung ist jedoch bisher nur im Normalbetrieb beziehungsweise Lastbetrieb des Hubkolbenmotors sinnvoll, weil nur dann eine ausreichende Antriebsenergie für den Abgasturbolader durch das Abgas des Hubkolbenmotors zur Verfügung steht.

### Offenbarung der Erfindung

Das erfindungsgemäße Verfahren mit den Merkmalen des Anspruchs 1 bietet den Vorteil, dass auch im Schubbetrieb die elektrische Maschine vorteilhaft generatorisch betreibbar ist, wobei das erfindungsgemäße Verfahren sicherstellt, dass die Maschine so stark angetrieben wird, dass elektrische Energie in einem ausreichenden Maße erzeugt wird.

Das erfindungsgemäße Verfahren sieht dazu vor, dass in einem Schubbetrieb des Hubkolbenmotors der Hubkolbenmotor in einem 2-Takt-Betrieb betrieben wird. Es ist also vorgesehen, dass bei einem Wechsel vom Normalbetrieb oder Lastbetrieb in den Schubbetrieb von einem 4-Takt-Betrieb in einen 2-Takt-Betrieb gewechselt wird, wobei in dem 2-Takt-Betrieb bei jedem Abwärtshub (Ansaughub) eines Kolbens das oder die diesen Kolben zugeordneten Einlassventile geöffnet und bei jedem Aufwärtshub (Kompressionshub) das oder die diesen Kolben zugeordneten Auslassventile geöffnet werden. Wobei die Auslassventile beim Abwärtshub und die Einlassventile beim Aufwärtshub insbesondere geschlossen sind. Dies hat zur Folge, dass im Schubbetrieb mit jedem Kolbenhub ein Gasmassenstrom aus den einzelnen Zylindern herausgetrieben und zum Antrieb des Abgasturboladers zur Verfügung gestellt wird. Damit wird der Gasmassenstrom im Vergleich zu einem 4-Takt-Schubbetrieb bei gleichem Saugrohrdruck verdoppelt. Damit steht ein deutlich größerer Gasmassenstrom und eine höhere Enthalpie während des Schubbetriebs zur Verfügung, sodass eine Turbine des Abgasturboladers eine adäquate Leistung zum generatorischen Betrieb der elektrischen Maschine generieren kann.

Gemäß einer bevorzugten Weiterbildung der Erfindung ist vorgesehen, dass eine Nockenwelle des Hubkolbenmotors im Lastbetrieb mit einem 4-Takt-Nockenprofil und in einem Schubbetrieb mit einem 2-Takt-Nockenprofil betrieben wird. Die unterschiedlichen Betriebsarten des Hubkolbenmotors werden somit durch Nockenprofile der Nockenwelle bereitgestellt. Durch Wechsel des Nockenprofils wird somit auf einfache Art und Weise zwischen dem 4-Takt-Betrieb und dem 2-Takt-Betrieb gewechselt.

Insbesondere ist vorgesehen, dass zum Verändern des Nockenprofils die Nockenwelle axial verschoben wird. Dadurch kann einfach zwischen unterschiedlichen Nockenprofilen gewechselt werden. Verstellbare Nockenwellen mit unterschiedlichen Nockenprofilen sind grundsätzlich bekannt. Vorliegend werden die Nockenprofile für unterschiedliche Betriebsarten des Hubkolbenmotors ausgebildet, sodass für jeweils mindestens ein Einlassventil und/oder Auslassventil mindestens eines Zylinders des Hubkolbenmotors jeweils ein Nockenprofil für einen 4-Takt-Betrieb und ein weiteres Nockenprofil für einen 2-Takt-Betrieb vorhanden sind.

Gemäß einer bevorzugten Weiterbildung der Erfindung ist vorgesehen, dass die Nockenwelle durch eine Kulissenführung verschoben wird. Hierzu weist die Nockenwelle an ihrer Mantelaußenseite insbesondere eine Führungsnut auf, in welcher ein Führungsstift einbringbar ist. Die Führungsnut erstreckt sich dabei insbesondere in einer Kurvenführung, während der Führungsstift gehäusefest angeordnet und radial zur Nockenwelle verschiebbar ist, sodass dann, wenn er in die Führungsnut eingreift, die Nockenwelle axial verschiebt.

Weiterhin ist bevorzugt vorgesehen, dass im Schubbetrieb eine Drosselklappe des Hubkolbenmotors maximal weit geöffnet wird. Dadurch wird gewährleistet, dass durch den Hubkolbenmotor der größtmögliche Gasstrom gefördert wird. Dies ist zweckmäßigerweise dann vorgesehen, wenn der Hubkolbenmotor ein Benzinmotor ist.

Ferner ist bevorzugt vorgesehen, dass im Schubbetrieb ein Wastegate des Abgasturboladers geschlossen und/oder eine variable Turbinengeometrie des Abgasturboladers auf maximale Antriebsleistung eingestellt wird. Durch das Schließen des Wastegate oder das Einstellen der Turbinengeometrie wird erreicht, dass die Turbine des Abgasturboladers mit der maximal möglichen Antriebsenergie beaufschlagt wird, sodass die elektrische Maschine eine entsprechend hohe generatorische Leistung erzielt.

Weiterhin ist bevorzugt vorgesehen, dass im Schubbetrieb die Öffnungszeit zumindest eines Auslassventils auf spät verstellt wird. Dadurch wird erreicht, dass zunächst eine zylinderinterne Verdichtung erfolgt, die bei Öffnen des Auslassventils eine zusätzliche Enthalpie für die Turbine in Form einer Stoßaufladung bereitstellt.

Die erfindungsgemäße Vorrichtung mit den Merkmalen des Anspruchs 8 zeichnet sich durch ein speziell hergerichtetes Steuergerät aus, dass das erfindungsgemäße Verfahren durchführt. Weitere Merkmale und Vorteile ergeben sich aus dem zuvor Beschriebenen sowie aus den Ansprüchen. Insbesondere ist vorgesehen, dass die elektrische Maschine als Medienspaltmaschine ausgebildet ist, die in einem Saugkanal des Abgasturboladers liegt.

Die erfindungsgemäße Antriebsvorrichtung mit den Merkmalen des Anspruchs 9 zeichnet sich dadurch aus, dass der Hubkolbenmotor wenigstens eine verstellbare Nockenwelle aufweist, die zwischen einem 2-Takt-Nockenprofil und einem 4-Takt-Nockenprofil verstellbar ist, und dass die erfindungsgemäße Vorrichtung vorhanden ist. Durch das Verstellen der Nockenwelle wird die Brennkraftmaschine somit von einem 4-Takt-Betrieb in den zuvor beschriebenen 2-Takt-Betrieb oder andersherum geschaltet. Weitere Merkmale und Vorteile ergeben sich aus dem zuvor Beschriebenen sowie aus den Ansprüchen. Insbesondere ist vorgesehen, dass eine derartige Nockenwelle sowohl den Einlass- als auch den Auslassventilen zugeordnet ist, sodass mit jedem Kolbenabwärtshub zumindest ein zugehöriges Einlassventil geöffnet und mit jedem Kolbenaufwärtshub zumindest ein jeweils zugeordnetes Auslassventil geöffnet ist. Dadurch kann der Massendurchsatz im 2-Takt-Betrieb bei gleichem Saugrohrdruck im Vergleich zu einem 4-Takt-Betrieb verdoppelt werden.

Das erfindungsgemäße Kraftfahrzeug mit den Merkmalen des Anspruchs 10 zeichnet sich durch die erfindungsgemäße Antriebsvorrichtung aus. Es ergeben sich hierdurch die zuvor bereits genannten Vorteile. Weitere Merkmale und Vorteile ergeben sich aus dem zuvor Beschriebenen sowie aus den Ansprüchen.

Im Folgenden soll die Erfindung anhand der Zeichnung näher erläutert werden. Dazu zeigen
- Figur 1: eine Antriebsvorrichtung eines Kraftfahrzeugs in einer vereinfachten Darstellung,
- Figur 2: einen Abgasturbolader der Antriebsvorrichtung in einer vereinfachten Schnittdarstellung und
- Figur 3: eine Verstelleinrichtung des Hubkolbenmotors in einer vereinfachten Darstellung.

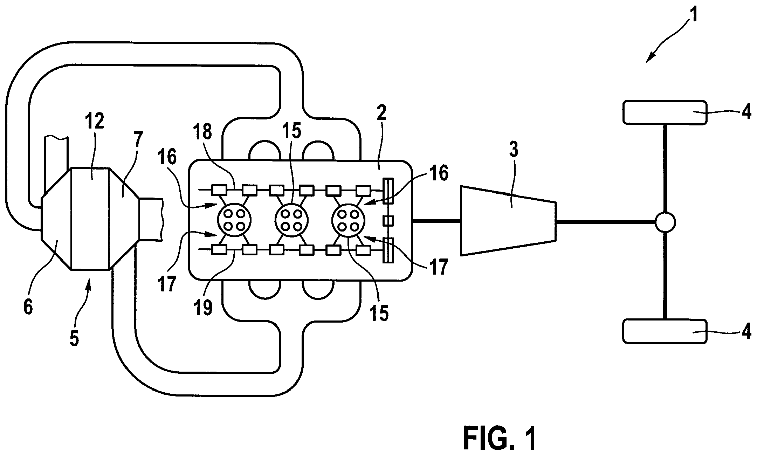

Figur 1 zeigt in einer vereinfachten Darstellung eine Antriebsvorrichtung 1 eines hier nicht näher dargestellten Kraftfahrzeugs. Die Antriebsvorrichtung 1 weist einen Hubkolbenmotor als Antriebsmaschine auf, der durch ein Getriebe 3 mit Antriebsrädern 4 wirkverbunden ist. Dem Hubkolbenmotor 2 ist ein Abgasturbolader 5 zugeordnet, der eine Turbine 6 und einen Verdichter 7 aufweist, die miteinander gekoppelt sind.

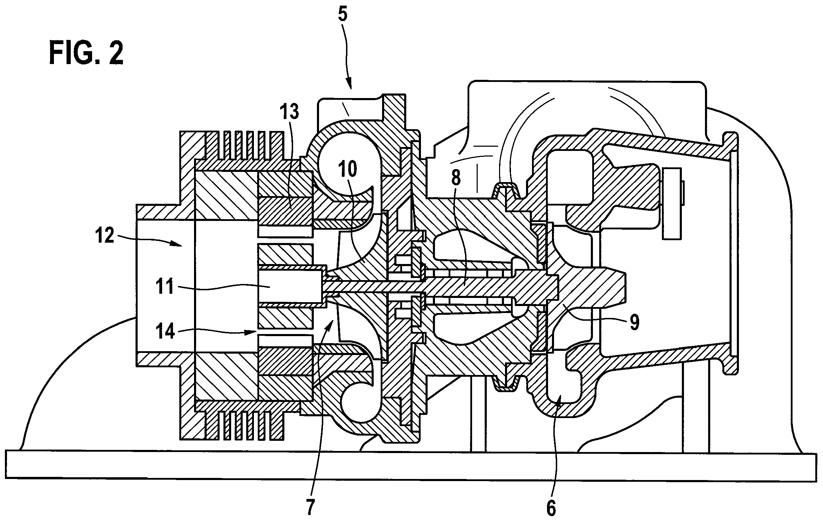

Figur 2 zeigt hierzu eine vergrößerte Schnittdarstellung des Abgasturboladers 5. Der Verdichter 6 weist ein auf einer Welle 8 drehfest angeordnetes Verdichterrad 9 auf, wobei auf derselben Welle 8 ein Turbinenrad 10 der Turbine 7 ebenfalls drehfest angeordnet ist. Außerdem sitzt auf der Welle 8 drehfest ein Rotor 11 einer elektrischen Maschine 12, die als Medienspaltmaschine ausgebildet ist, die einen koaxial zu dem Rotor 11 gehäusefest angeordneten Stator 13 aufweist. In einem Luftspalt 14 zwischen Stator 13 und Rotor 11 ist ein Kanal für das zu fördernde Medium, insbesondere das Abgas der Brennkraftmaschine 2 ausgebildet, das zu dem Verdichterrad 10 strömt beziehungsweise von diesem angesaugt wird, um verdichtet dem Hubkolbenmotor 2 zur Verfügung gestellt zu werden.

Wie in Figur 1 vereinfacht gezeigt, weist der Hubkolbenmotor mehrere Zylinder 15 auf, in welchen axial verlagerbare Hubkolben angeordnet sind. Jedem Zylinder 15 sind außerdem zwei Einlassventile 16 und zwei Auslassventile 17 zugeordnet, die den Gaswechsel in dem jeweiligen Zylinder 15 steuern. Zur Betätigung der Einlassventile 16 und Auslassventile 17 weist der Hubkolbenmotor weiterhin zwei Nockenwellen 18 und 19 auf, die für jedes Ventil wenigstens ein Nockenprofil aufweisen, durch welches das Ventil entgegen der Kraft eines Federelements auf bekannte Art und Weise verlagert wird.

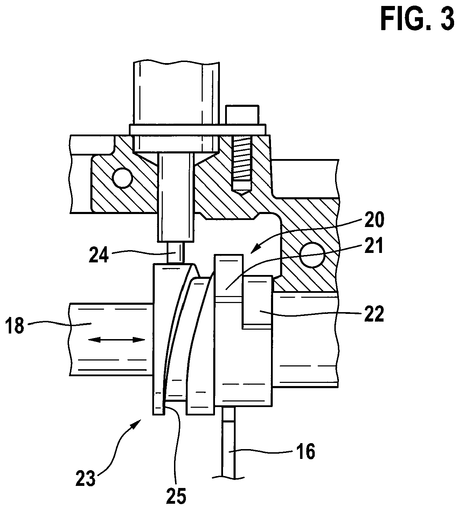

Figur 3 zeigt eine Detailansicht des Hubkolbenmotors 2 in einer vereinfachten Darstellung mit einem Einlassventil 16 und der Nockenwelle 18. Die Nockenwelle 18 ist als axial verstellbare Nockenwelle ausgebildet, die also axial verschiebbar ist. Dabei trägt die Nockenwelle für jedes Einlassventil 16 jeweils einen Nocken 20, der als Doppelnocken ausgebildet ist und dazu zwei nebeneinander liegende unterschiedlich ausgebildete Nockenprofile 21 und 22 umfasst. Weiterhin ist dem Nocken 20 eine Kulissenführung 23 zugeordnet, die einen gehäuseseitig angeordneten Führungsstift 24 aufweist, der radial verlagerbar ist, um in eine in der Welle 8 ausgebildete Führungsnut 25 einzugreifen. Die Führungsnut 25 ist derart ausgeformt, dass, wenn der Führungsstift 24 in der Führungsnut 25 einliegt und die Nockenwelle 18 rotiert, die Nockenwelle 18 axial verschoben wird. Die Kulissenführung 23 ist dabei derart ausgebildet, dass je nach Verschiebung der Nockenwelle 18 das Nockenprofil 21 oder das Nockenprofil 22 mit dem Einlassventil 16 zusammenwirkt. Entsprechende Nockenprofile sind auch für die Auslassventile 17 vorgesehen.

Im Unterschied zu bekannten Lösungen ist vorliegenden vorgesehen, dass das Nockenprofil 21 für den Normalbetrieb beziehungsweise Lastbetrieb des Hubkolbenmotors 2, in welchem dieser ein Antriebsdrehmoment erzeugt, ausgebildet ist, während das Nockenprofil 22 für einen vorteilhaften Schub-Rekuperationsbetrieb des Hubkolbenmotors 2 ausgebildet ist. Hierzu ist vorliegend vorgesehen, dass das Nockenprofil 21 ein 4-Takt-Nockenprofil ist, das im Betrieb des Hubkolbenmotors 2 dafür sorgt, dass das Einlassventil 16 gemäß einem 4-Takt-Betrieb betätigt wird, und dass das Nockenprofil 22 als 2-Takt-Nockenprofil ausgebildet ist, sodass es das Einlassventil mit jedem Abwärtshub des Kolbens öffnet. Zweckmäßigerweise ist jedem der Ventile 16, 17 des Hubkolbenmotors 2 ein entsprechender Nocken 20 zugeordnet, wobei beide Nockenwellen 18 und 19 entsprechend verschiebbar sind, um zwischen dem 4-Takt-Betrieb und dem 2-Takt-Betrieb zu wechseln, wobei die den Auslassventilen 17 zugeordneten Nocken 20, die Auslassventile im 2-Takt-Betrieb mit jedem Aufwärtshub des zugehörigen Kolbens geöffnet werden.

Wie bereits erwähnt, dient das Nockenprofil 22 dem Schubbetrieb. Schaltet der Hubkolbenmotor 2 in einen Schubbetrieb, so wird also das Nockenprofil 22 eingestellt, sodass der Hubkolbenmotor 2 in einen 2-Takt-Betrieb geschaltet wird. Dies hat den Vorteil, dass der Gasstromdurchsatz durch den Hubkolbenmotor 2 im Vergleich zu dem 4-Takt-Betrieb verdoppelt wird. Dadurch steigt die Enthalpie und der Gasmassenstrom, der der Turbine 6 zugutekommt, sodass die Antriebsleistung des Abgasturboladers 5 im Schubbetrieb der Antriebsvorrichtung 1 noch ausreichend hoch ist, um die elektrische Maschine 12 anzutreiben, sodass diese in einem generatorischen Betrieb elektrische Energie erzeugen kann.

Durch die vorgeschlagene Ausführungsform und den Betrieb der Antriebsvorrichtung 1 wird also erreicht, dass eine vorteilhafte Rekuperationsstrategie fahrbar ist, durch welche im Normalbetrieb oder Lastbetrieb der Antriebsvorrichtung 1 der Hubkolbenmotor 2 im 4-Takt-Betrieb betrieben und gegebenenfalls der Abgasturbolader 5 durch die motorisch betriebene Maschine 12 unterstützt wird, wobei im Schubbetrieb auf einen 2-Takt-Betrieb des Hubkolbenmotors 2 gewechselt und die Maschine 12 generatorisch betrieben wird. Durch die vorteilhaft gewählten Nockenprofile 21 und 22 wird erreicht, dass im Schubbetrieb mit jedem Kolben-Abwärtshub, das diesem Kolben zugeordneten Einlassventil geöffnet und mit jedem KolbenAufwärtshub, das diesem Kolben zugeordnete Auslassventil geöffnet ist, sodass der Massendurchsatz bei gleichen Saugrohrdruck verdoppelt wird.

Ist die Hubkolbenmaschine 2 als Ottomotor ausgebildet, wird bevorzugt zusätzlich eine Drosselklappe der Hubkolbenmaschine 2 maximal weit geöffnet. Weist der Abgasturbolader 5 eine variable Turbinengeometrie auf, die insbesondere verstellbare Leitschaufeln umfasst, so werden diese im Schubbetrieb bevorzugt auf eine min-flow anschlagsnahe Position verstellt. Weist der Abgasturbolader 5 eine Wastegateeinrichtung auf, so wird im Schubbetrieb das Wastegate zweckmäßigerweise geschlossen, sodass der maximal mögliche Massenstrom durch die Turbine geführt wird.

Vorteilhafterweise wird im Schubbetrieb außerdem der Zeitpunkt zum Öffnen des jeweiligen Auslassventils 17 um einige 10° Kugelwellenwinkel auf spät gestellt beziehungsweise verzögert, sodass zunächst eine zylinderinterne Verdichtung erfolgt, bevor das jeweilige Auslassventil öffnet. Dadurch wird beim Öffnen des entsprechenden Auslassventils 17 zusätzliche Enthalpie für den Antrieb der Turbine 7 in Form einer Stoßaufladung bereitgestellt.

Gemäß einem weiteren, hier nicht dargestellten Ausführungsbeispiel, ist es auch denkbar, anstelle einer Medienspaltmaschine 12 eine elektrische Maschine zwischen Turbinenrad 9 und Verdichterrad 10 auf der Welle 8 anzuordnen. Auch hierdurch ergibt sich durch den vorteilhaften Betrieb des Hubkolbenmotors 2 eine Effizienzsteigerung bei der Rekuperation elektrischer Energie.

## Patentansprüche

1. Verfahren zum Betreiben einer Antriebsvorrichtung (1) eines Kraftfahrzeugs, die einen Hubkolbenmotor (2) und einen Abgasturbolader (5) aufweist, wobei in einem Lastbetrieb der Hubkolbenmotor (2) in einem 4-Takt-Betrieb betrieben wird, und wobei der Abgasturbolader (5) eine elektrische Maschine (12), insbesondere Medienspaltmaschine, aufweist, die in einem Schubbetrieb des Hubkolbenmotors (2) generatorisch betrieben wird, **dadurch gekennzeichnet, dass** in dem Schubbetrieb der Hubkolbenmotor (2) in einem 2-Takt-Betrieb betrieben wird.

2. Verfahren nach Anspruch 1, **dadurch gekennzeichnet, dass** wenigstens eine Nockenwelle (18,19) des Hubkolbenmotors (2) im Lastbetrieb mit einem 4-Takt-Nockenprofil (21) und in einem Schubbetrieb mit einem 2-Takt-Nockenprofil (22) betrieben wird.

3. Verfahren nach einem der vorhergehenden Ansprüche, **dadurch gekennzeichnet, dass** zum Verändern des Nockenprofils (21,22) die Nockenwelle (18,19) axial verschoben wird.

4. Verfahren nach einem der vorhergehenden Ansprüche, **dadurch gekennzeichnet, dass** die Nockenwelle (18,19) durch eine Kulissenführung (23) verschoben wird.

5. Verfahren nach einem der vorhergehenden Ansprüche, **dadurch gekennzeichnet, dass** im Schubbetrieb eine Drosselklappe des Hubkolbenmotors (2) maximal weit geöffnet wird.

6. Verfahren nach einem der vorhergehenden Ansprüche, **dadurch gekennzeichnet, dass** im Schubbetrieb ein Wastegate des Abgasturboladers (5) geschlossen und/oder eine variable Turbinengeometrie des Abgasturboladers (5) auf eine Minimalstellung eingestellt werden.

7. Verfahren nach einem der vorhergehenden Ansprüche, **dadurch gekennzeichnet, dass** im Schubbetrieb der Öffnungszeitpunkt zumindest eines Auslassventils durch das 2-Takt-Nockenprofil (22) auf spät verstellt wird.

8. Vorrichtung (1) zum Betreiben eines Kraftfahrzeugs, das einen Hubkolbenmotor (2) und einen Abgasturbolader (5) aufweist, wobei der Hubkolbenmotor (2) in einem Lastbetrieb in einem 4-Takt-Betrieb betrieben wird/betreibbar ist, und wobei der Abgasturbolader (5) eine elektrische Maschine (12), insbesondere Medienspaltmaschine aufweist, die in einem Schubbetrieb des Hubkolbenmotors (2) generatorisch betrieben wird/betreibbar ist, **gekennzeichnet durch** ein speziell hergerichtetes Steuergerät, das das Verfahren nach einem der Ansprüche 1 bis 7 durchführt.

9. Antriebsvorrichtung für ein Kraftfahrzeug, die einen Hubkolbenmotor (2) und einen Abgasturbolader (5) aufweist, wobei der Hubkolbenmotor (2) in einem Lastbetrieb in einem 4-Takt-Betrieb betrieben wird/betreibbar ist, und wobei der Abgasturbolader (5) eine elektrische Maschine (12), insbesondere Medienspaltmaschine aufweist, die in einem Schubbetrieb des Hubkolbenmotors (2) generatorisch betrieben wird/betreibbar ist, **dadurch gekennzeichnet, dass** der Hubkolbenmotor (2) wenigstens eine verstellbare Nockenwelle (18,19) zum Wechseln zwischen einem 4-Takt-Nockenprofil (21) und einem 2-Takt-Nockenprofil (22) aufweist, und dass eine Vorrichtung nach Anspruch 8 vorhanden ist.

10. Kraftfahrzeug mit einer Antriebsvorrichtung nach Anspruch 9.

## Claims

1. Method for operating a drive apparatus (1) of a motor vehicle which has a reciprocating-piston engine (2) and an exhaust-gas turbocharger (5), wherein, during operation under load, the reciprocating-piston engine (2) is operated in a 4-stroke operating cycle, and wherein the exhaust-gas turbocharger (5) has an electric machine (12), in particular media gap machine, which is operated as a generator during overrun operation of the reciprocating-piston engine (2), **characterized in that**, during overrun operation, the reciprocating-piston engine (2) is operated in a 2-stroke operating cycle.

2. Method according to Claim 1, **characterized in that** at least one camshaft (18, 19) of the reciprocating-piston engine (2) is operated with a 4-stroke cam profile (21) during operation under load and with a 2-stroke cam profile (22) during overrun operation.

3. Method according to any of the preceding claims, **characterized in that** the camshaft (18, 19) is displaced axially in order to change the cam profile (21, 22).

4. Method according to any of the preceding claims, **characterized in that** the camshaft (18, 19) is displaced by means of a sliding-block guide (23).

5. Method according to any of the preceding claims, **characterized in that**, during overrun operation, a throttle flap of the reciprocating-piston engine (2) is opened to a maximum extent.

6. Method according to any of the preceding claims, **characterized in that**, during overrun operation, a wastegate of the exhaust-gas turbocharger (5) is closed and/or a variable turbine geometry of the exhaust-gas turbocharger (5) is set to a minimum position.

7. Method according to any of the preceding claims, **characterized in that**, during overrun operation, the opening time of at least one outlet valve is retarded by means of the 2-stroke cam profile (22).

8. Apparatus (1) for operating a motor vehicle which has a reciprocating-piston engine (2) and an exhaust-gas turbocharger (5), wherein the reciprocating-piston engine (2) is operated/operable in a 4-stroke operating cycle during operation under load, and wherein the exhaust-gas turbocharger (5) has an electric machine (12), in particular media gap machine, which is operated/operable as a generator during overrun operation of the reciprocating-piston engine (2), **characterized by** a specially configured control unit which carries out the method according to any of Claims 1 to 7.

9. Drive apparatus for a motor vehicle, which drive apparatus has a reciprocating-piston engine (2) and an exhaust-gas turbocharger (5), wherein the reciprocating-piston engine (2) is operated/operable in a 4-stroke operating cycle during operation under load, and wherein the exhaust-gas turbocharger (5) has an electric machine (12), in particular media gap machine, which is operated/operable as a generator during overrun operation of the reciprocating-piston engine (2), **characterized in that** the reciprocating-piston engine (2) has at least one adjustable camshaft (18, 19) for changing over between a 4-stroke cam profile (21) and a 2-stroke cam profile (22), and **in that** an apparatus according to Claim 8 is provided.

10. Motor vehicle having a drive apparatus according to claim 9.

## Revendications

1. Procédé de fonctionnement d'un dispositif d'entraînement (1) d'un véhicule à moteur qui comporte un moteur à piston alternatif (2) et un turbocompresseur de gaz d'échappement (5), le moteur à piston alternatif (2) étant entraîné en fonctionnement à 4 temps dans un mode de charge et le turbocompresseur de gaz d'échappement (5) comportant une machine électrique (12), notamment une machine à fente, entraînée en générateur dans un mode de poussée du moteur à piston alternatif (2), **caractérisé en ce que** dans le mode de poussée, le moteur à piston alternatif (2) est entraîné dans un fonctionnement à 2 temps.

2. Procédé selon la revendication 1, **caractérisé en ce qu'**au moins un arbre à cames (18, 19) du moteur à piston alternatif (2) est entraîné en mode de charge avec un profil de came à 4 temps (21) et en mode de poussée avec un profil de came à 2 temps (22).

3. Procédé selon l'une quelconque des revendications précédentes, **caractérisé en ce que** l'arbre à cames (18, 19) est dévié dans le plan axial pour modifier le profil de came (21,22).

4. Procédé selon l'une quelconque des revendications précédentes, **caractérisé en ce que** l'arbre à cames (18, 19) est dévié par un guide à coulisse (23).

5. Procédé selon l'une quelconque des revendications précédentes, **caractérisé en ce qu'**en mode de poussée, un clapet d'étranglement du moteur à piston alternatif (2) est ouvert au maximum de sa largeur.

6. Procédé selon l'une quelconque des revendications précédentes, **caractérisé en ce qu'**en mode de poussée, une valve de décharge du turbocompresseur de gaz d'échappement (5) est fermée et/ou qu'une géométrie de turbine variable du turbocompresseur de gaz d'échappement (5) est réglée sur une position minimale.

7. Procédé selon l'une quelconque des revendications précédentes, **caractérisé en ce qu'**en mode de poussée, le moment d'ouverture d'au moins une soupape d'échappement peut être réglé par le profil de came à 2 temps (22) de façon à se produire tardivement.

8. Dispositif (1) de fonctionnement d'un véhicule à moteur qui comporte un moteur à piston alternatif (2) et un turbocompresseur de gaz d'échappement (5), le moteur à piston alternatif (2) étant entraîné ou pouvant être entraîné en mode de charge dans un fonctionnement à 4 temps et le turbocompresseur de gaz d'échappement (5) comportant une machine électrique (12), notamment une machine à fente, entraînée ou pouvant être entraînée en générateur en mode de poussée du moteur à piston alternatif (2), **caractérisé par** la présence d'un appareil de commande spécifiquement agencé mettant en oeuvre le procédé selon l'une quelconque des revendications 1 à 7.

9. Dispositif d'entraînement pour un véhicule à moteur qui comporte un moteur à piston alternatif (2) et un turbocompresseur de gaz d'échappement (5), le moteur à piston alternatif (2) étant entraîné ou pouvant être entraîné en mode de charge dans un fonctionnement à 4 temps et le turbocompresseur de gaz d'échappement (5) comportant une machine électrique (12), notamment un machine à fente, entraînée ou pouvant être entraînée en générateur dans un mode de poussée du moteur à piston alternatif (2), **caractérisé en ce que** le moteur à piston alternatif (2) comporte au moins un arbre à cames (18, 19) réglable pour alterner entre un profil de came à 4 temps (21) et un profil de came à 2 temps (22) et qu'un dispositif selon la revendication 8 est présent.

10. Véhicule à moteur équipé d'un dispositif d'entraînement selon la revendication 9.
